# EUROPÄISCHE PATENTSCHRIFT

(11) **EP 1 762 378 B1**
(45) Veröffentlichungstag und Bekanntmachung des Hinweises auf die Patenterteilung: **06.08.2008**
(21) Anmeldenummer: 05405527.2
(22) Anmeldetag: 07.09.2005
(51) Int. Cl.: B32B 27/08, B32B 27/18, B65D 77/20, C09J 7/02

(54) **Verfahren zur Herstellung eines Laminates für einen Verpackungsbehälter**
Method for preparation of a laminate for a package
Procédé de préparation d'un stratifié pour un emballage

(43) Veröffentlichungstag der Anmeldung: 14.03.2007
(73) Patentinhaber: Alcan Technology & Management Ltd., 8212 Neuhausen am Rheinfall (CH)
(72) Erfinder: Nägeli, Hans R., 8212 Neuhausen am Rheinfall (CH)

(56) Entgegenhaltungen:
- EP-A- 0 318 771
- EP-A- 1 167 220
- EP-A- 1 460 117
- EP-A- 1 484 259
- WO-A-99/46121
- WO-A-20/05092514
- DE-A1- 4 234 513

## Beschreibung

Die Erfindung betrifft ein Verfahren zur Herstellung eines Laminates nach dem Oberbegriff des Anspruchs 1.

Eine wiederverschliessbare Verpackung ist beispielsweise aus der EP-A-0 957 045 bekannt.

Zur Herstellung mehrschichtiger fotografischer Filme und Papiere wird seit Jahrzehnten ein unter dem Begriff "Curtain Coating" oder "Vorhangguss" bekannt gewordenes Flüssigfilm-Beschichtungsverfahren eingesetzt. Bei diesem Beschichtungsverfahren werden gleichzeitig mehrere Schichten aus einer Schlitzdüse in einem frei fallenden Vorhang auf eine laufende Materialbahn aufgetragen.

Es ist auch schon vorgeschlagen worden, die Vorhanggusstechnologie zur Beschichtung von Papier und zur Herstellung von Kunststoffverbundmaterialien einzusetzen.

In der WO-A-0154828 ist ein Verfahren zur Herstellung eines mehrschichtigen Verpackungslaminates mit wenigstens zwei übereinander liegenden Schichten offenbart, bei welchem Verfahren zwei oder mehr Schichten mittels Vorhangguss auf ein Substrat aus einem gegebenenfalls bereits beschichteten Papier, Karton oder Kunststofffilm flüssig aufgetragen und nachfolgend getrocknet werden. Die Flüssigfilm-Beschichtungen umfassen Klebstoffschichten, Barriereschichten, Zwischenschichten als Abstandshalter, Sauerstoff-Scavenger-Schichten und Heisssiegelschichten.

Aus der US-B-6 845 599 ist ein zur Vorhanggusstechnologie alternatives Flüssigfilm-Beschichtungsverfahren unter der Bezeichnung "Slide Coating", nachfolgend "Gleitbeschichtung" genannt, bekannt. Bei diesem Beschichtungsverfahren werden gleichzeitig mehrere Schichten aus einer Schlitzdüse von einer Düsengleitfläche direkt auf ein an der Ablaufkante der Düsengleitfläche vorbeigeführtes Substrat aufgetragen.

Der Erfindung liegt die Aufgabe zugrunde, ein Verfahren der eingangs genannten Art zu schaffen, welches auf einfache Weise die Kostengüstige Herstellung wiederverschliessbarer Verpackungen ermöglicht.

Die Aufgabe wird erfindungsgemäss gelöst durch ein Verfahren mit den Merkmalen des Anspruchs 1.

Der Begriff "Haftkleber" entspricht dem englischen Begriff "pressure sensitive adhesive (PSA). Eine Verklebung mit einem Haftkleber kann mehrmals gelöst und wieder hergestellt werden.

Die Dicke der Klebstoffschichten beträgt zweckmässigerweise etwa 1 bis 30 %, vorzugsweise 1 bis 10 %, der Dicke der Haftkleberschicht.

Die Haftkleberschichtschicht kann beispielsweise aus einem Klebstoff auf Acrylatbasis aufgebaut sein. Andere geeignete Basismaterialien sind A-B-A Block-Copolymere von Isopren mit Styrol oder Butadien mit Styrol.

Die Klebstoffschichten können beispielsweise aus Klebstoffen auf Urethanbasis, beispielsweise Polyether-, Polyester- oder Polybutadienpolyole, Acrylat- oder Epoxybasis oder aus Kombinationen der genannten Klebstoffe zusammengesetzt sein.

Die Schichten des Flüssigfilms können lösemittelbasiert, lösemittelfrei oder wasserbasiert sein. Lösemittelfreie Beschichtungsfluide werden bevorzugt, da bei diesen der übliche Trocknungsschritt entfällt.

Als Substrate können Kunststofffilme aus beispielsweise Polyethylenterephthalat (PET), Polyethylen (PP), Polypropylen (PP), Polyamid (PA), Metallfolien, wie z. B. Aluminiumfolien, gegebenenfalls mit einem Barrierematerial aus beispielsweise SiOₓ beschichtet, Papier oder eine Kombination aus wenigstens zwei der vorstehend genannten Materialien eingesetzt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- - Fig. 1: den Verfahrensablauf bei der Beschichtung eines Substrats mittels Vorhangguss im Querschnitt;
- - Fig. 2: einen Querschnitt durch ein Detail von Fig. 1 nach der Linie I-I;
- - Fig. 3: einen Querschnitt durch einen Teil eines mit einem aufgesiegeltem Laminat von Fig. 1 verschlossenen Behälters;
- - Fig. 4: den Querschnitt von Fig. 3 mit teilweise geöffnetem Behälter;
- - Fig. 5: den Verfahrensablauf bei der Verbindung von zwei Substraten mittels Vorhangguss im Querschnitt;
- - Fig. 6: einen Querschnitt durch ein Detail von Fig. 5 nach der Linie II-II;
- - Fig. 7: einen Querschnitt durch ein Detail von Fig. 5 nach der Linie III-III;
- - Fig. 8: einen Querschnitt durch einen Teil eines mit einem aufgesiegeltem Laminat von Fig. 5 verschlossenen Behälters;
- - Fig. 9: den Querschnitt von Fig. 4 mit teilweise geöffnetem Behälter;
- - Fig. 10: das zum Vorhangguss von Fig. 1 alternative Gleitbeschichtungsverfahren im Querschnitt.

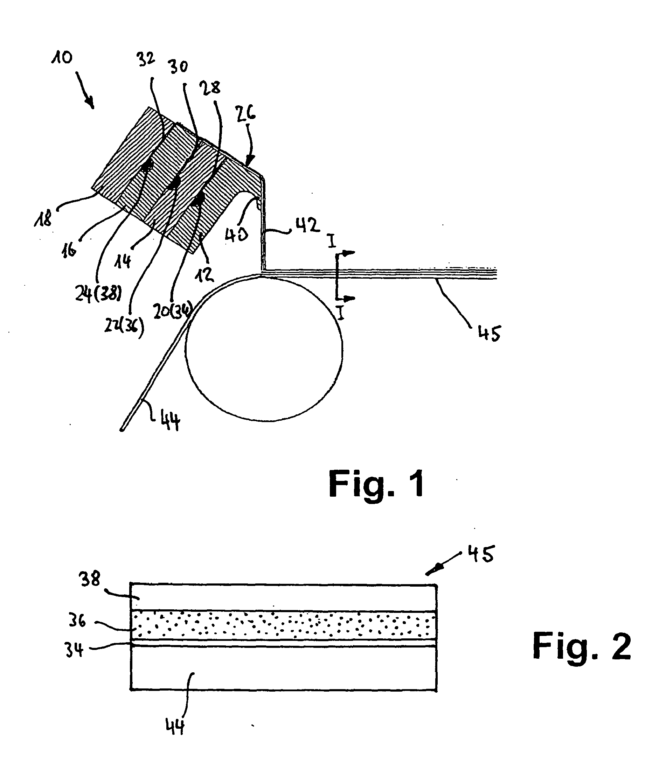

Eine in Fig. 1 gezeigte Düsenanordnung 10 einer nicht näher dargestellten Gleitflächen-Beschichtungsvorrichtung für eine Flüssigfilm-Beschichtung mittels Vorhangguss weist vier einander anliegende Module 12, 14, 16, 18 auf. Die aneinandergereihten Module 12, 14, 16, 18 bilden insgesamt drei quer zu einer Bahnlaufrichtung x angeordnete Verteilkammern 20, 22, 24 mit je einem an einer Düsengleitfläche 26 endenden Austrittsschlitz 28, 30, 32. Die Verteilkammern 20, 22, 24 werden entsprechend der gewünschten Austrittsmenge an der Düsengleitfläche 26 separat und dosiert mit Beschichtungsfluiden 34 (Permanentkleber), 36 (Haftkleber), 38 (Siegellack) versorgt.

Die aus den Verteilkammern 20, 22, 24 über die Austrittsschlitze 28, 30, 32 an der Düsengleitfläche 26 austretenden und in Schichten übereinandergelegten Beschichtungsfluide 34, 36, 38 laufen als dreischichtiger Flüssigkeitsfilm über eine am Modul 12 angeordnete Ablaufkante 40 und bilden einen frei fallenden Vorhang 42.

Der aus den Beschichtungsfluiden 34, 36, 38 aufgebaute dreischichtige Vorhang 42 trifft im wesentlichen senkrecht auf eine sich in Laufrichtung x bewegende Substratbahn 44 und bildet auf deren Oberfläche die in Fig. 2 gezeigte fluide Beschichtung als Teil eines Laminates 45.

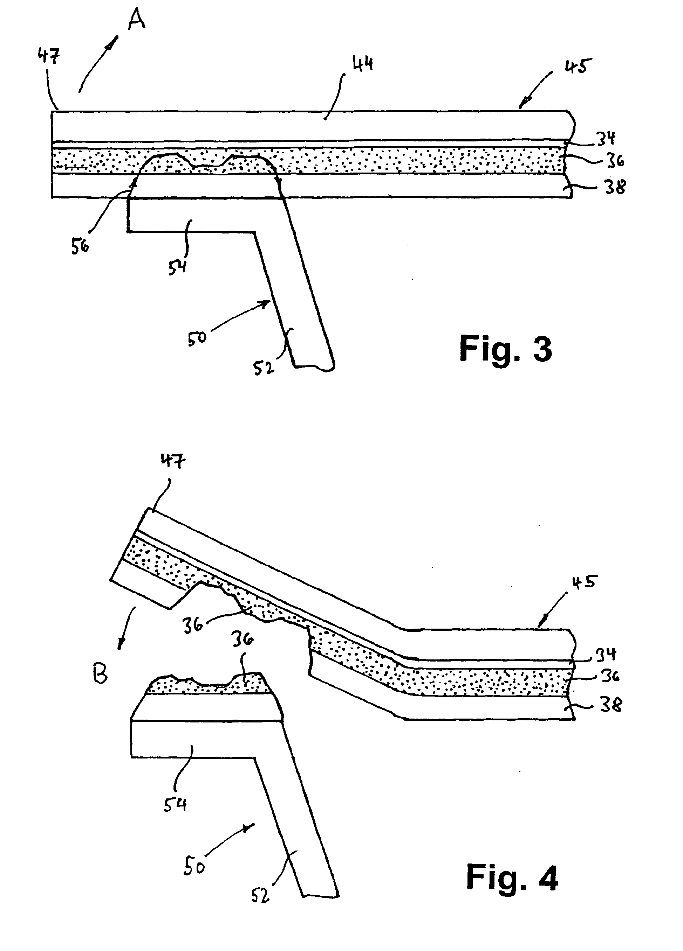

In Fig. 3 ist ein Laminat 45 als Deckel mit einer Aufreisslasche 47 auf einen von der Wand 52 eines Behälters 50 nach aussen abragenden Siegelrand 54 aufgesiegelt. Beim Ziehen an der Aufreisslasche 47 in Pfeilrichtung A reisst die kohäsiv brechende Heisssiegelschicht 38 an der äusseren Kante des Siegelrandes 54 und ein Riss 56 setzt sich bis in die Haftkleberschicht 36 fort und verläuft in oder am Rand der Haftkleberschicht 36 nach innen. An der inneren Kante des Siegelrandes 54 reisst die Heisssiegelschicht 38 erneut durch. Beim weiteren Ziehen an der Aufreisslasche 47 in Pfeilrichtung A wird der Deckel bzw. das Laminat 45 vom Siegelrand 54 getrennt und der Behälter 50 wird geöffnet.

Wie in Fig. 4 gezeigt, führt der beim Ziehen an der Aufreisslasche 47 entstehende Riss 56 zu einem Freilegen der Haftkleberschicht 36 im Bereich des Siegelrandes 54, wobei je nach Rissverlauf die Haftkleberschicht 36 am Substrat 44 und/oder an der Heisssiegelschicht 38 stehen bleibt. Durch Andrücken des Deckels bzw. des Laminates 45 in Pfeilrichtung B gegen den Siegelrand 54 ergibt sich erneut eine Haftung des Deckels auf dem Siegelrand 54 des Behälters 50. Auf diese Weise kann der Behälter 50 wiederholt geöffnet und wieder verschlossen werden.

Der in den Fig. 3 und 4 dargestellte Behälter 50 mit Aufreissdeckel ist beispielsweise wie folgt aufgebaut:

| | |
|---|---|
| Substrat 44 | Film aus Polyethylenterephthalat (PET) |
| Klebstoffschicht 34 | Polyurethan (PUR) |
| Haftkleberschicht 36 | Acrylatbasis |
| Heisssiegellack 38 | Acrylatbasis |
| Behälter 50 | Polypropylen (PP) |

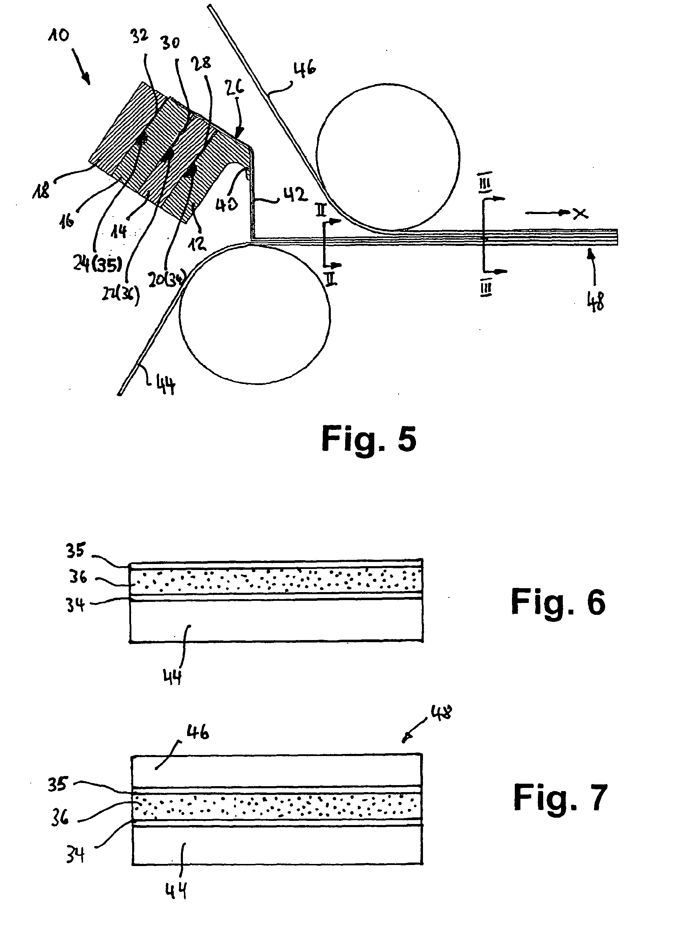

Eine in Fig. 5 gezeigte Düsenanordnung 10 einer nicht näher dargestellten Gleitflächen-Beschichtungsvorrichtung für eine Flüssigfilm-Beschichtung mittels Vorhangguss weist wie die Anordnung von Fig. 1 vier einander anliegende Module 12, 14, 16, 18 auf. Die aneinandergereihten Module 12, 14, 16, 18 bilden insgesamt drei quer zu einer Bahnlaufrichtung x angeordnete Verteilkammern 20, 22, 24 mit je einem an einer Düsengleitfläche 26 endenden Austrittsschlitz 28, 30, 32. Die Verteilkammem 20, 22, 24 werden entsprechend der gewünschten Austrittsmenge an der Düsengleitfläche 26 separat und dosiert mit Beschichtungsfluiden 34 (Permanentkleber), 36 (Haftkleber), 35 (Permanenthaftkleber) versorgt.

Die aus den Verteilkammern 20, 22, 24 über die Austrittsschlitze 28, 30, 32 an der Düsengleitfläche 26 austretenden und in Schichten übereinandergelegten Beschichtungsfluide 34, 36, 38 laufen als dreischichtiger Flüssigkeitsfilm über eine am Modul 12 angeordnete Ablaufkante 40 und bilden einen frei fallenden Vorhang 42.

Der aus den Beschichtungsfluiden 34, 36, 35 aufgebaute dreischichtige Vorhang 42 trifft im wesentlichen senkrecht auf eine sich in Laufrichtung x bewegende erste Substratbahn 44 und bildet auf deren Oberfläche die in Fig. 6 gezeigte fluide Beschichtung.

Der mit den Beschichtungsfluiden 34, 36, 35 beschichteten ersten Substratbahn 44 wird in Bandlaufrichtung x eine zweite Substratbahn 46 in der Form eines Heisssiegelfilms zugeführt und mit der beschichteten ersten Substratbahn 44 zu einem in Fig. 7 gezeigten Laminat 48 verklebt. Anstelle der Zuführung eines Heisssiegelfilms als zweite Substratbahn 46 kann beispielsweise auch eine Heisssiegelschicht über eine Extrusionsbeschichtung auf die mit den Beschichtungsfluiden 34, 36, 35 beschichtete erste Substratbahn 44 aufgebracht werden.

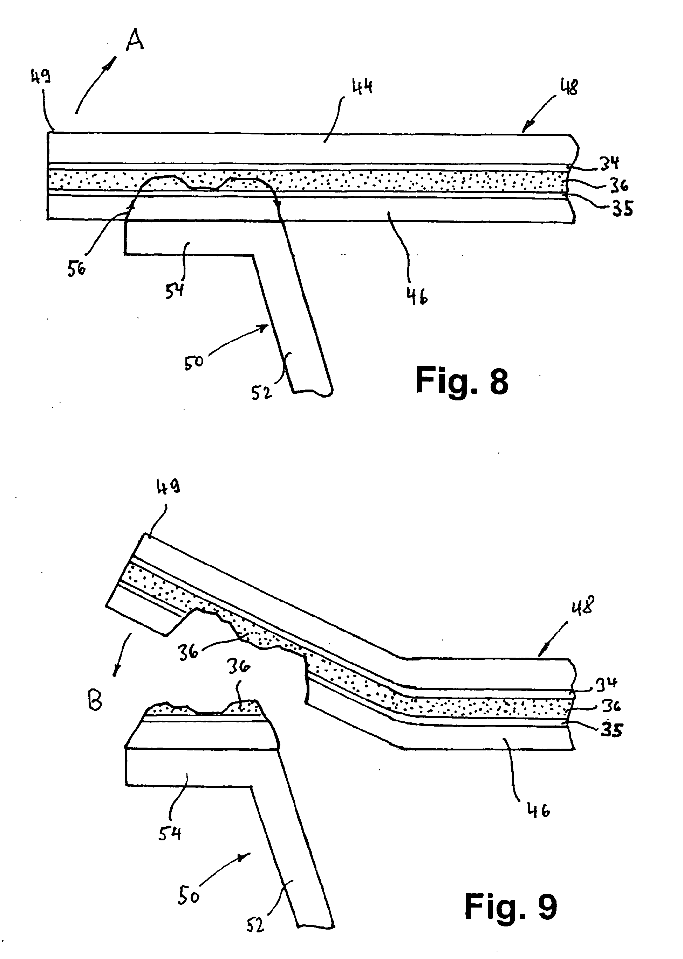

In Fig. 8 ist ein Laminat 48 als Deckel mit einer Aufreisslasche 49 auf einen von der Wand 52 eines Behälters 50 nach aussen abragenden Siegelrand 54 aufgesiegelt. Beim Ziehen an der Aufreisslasche 49 in Pfeilrichtung A reisst die kohäsiv brechende Heisssiegelschicht 46 an der äusseren Kante des Siegelrandes 54 und ein Riss 56 setzt sich bis in die Haftkleberschicht 36 fort und verläuft in oder am Rand der Haftkleberschicht 36 nach innen. An der inneren Kante des Siegelrandes 54 reisst die Heisssiegelschicht 46 erneut durch. Beim weiteren Ziehen an der Aufreisslasche 49 in Pfeilrichtung A wird der Deckel bzw. das Laminat 48 vom Siegelrand 54 getrennt und der Behälter 50 wird geöffnet.

Wie in Fig. 9 gezeigt, führt der beim Ziehen an der Aufreisslasche 49 entstehende Riss 56 zu einem Freilegen der Haftkleberschicht 36 im Bereich des Siegelrandes 54, wobei je nach Rissverlauf die Haftkleberschicht 36 am Substrat 44 und/oder an der Heisssiegelschicht 46 stehen bleibt. Durch Andrücken des Deckels bzw. des Laminates 48 in Pfeilrichtung B gegen den Siegelrand 54 ergibt sich erneut eine Haftung des Deckels auf dem Siegelrand 54 des Behälters 50. Auf diese Weise kann der Behälter 50 wiederholt geöffnet und wieder verschlossen werden.

Der in den Fig. 8 und 9 dargestellte Behälter 50 mit Aufreissdeckel ist beispielsweise wie folgt aufgebaut:

| | |
|---|---|
| Substrat 44 | Film aus Polyethylenterephthalat (PET) |
| Klebstoffschicht 34 | Polyurethan (PUR) |
| Haftkleberschicht 36 | Acrylatbasis |
| Klebstoffschicht 35 | Polyurethan (PUR) |
| Heisssiegelschicht 46 | Polypropylen (PP) |
| | |
| Behälter 50 | Polypropylen (PP) |

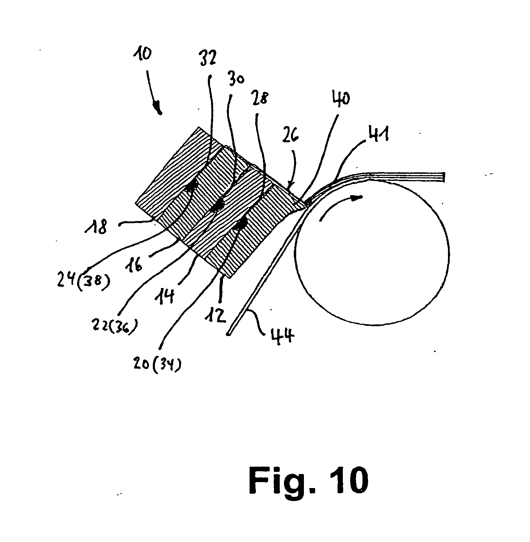

Fig. 10 zeigt eine Düsenanordnung 10 mit einem im wesentlichen gleichen Aufbau wie die Düsenanordnung von Fig. 1, wobei die Ablaufkante 40 zur Durchführung des Gleitbeschichtungsverfahrens angepasst ist. Der dreischichtige Flüssigkeitsfilm 41 gleitet hier von der Ablaufkante 40 direkt auf die an der Ablaufkante 40 vorbeigeführte Substratbahn 44.

## Patentansprüche

1. Verfahren zur Herstellung eines Laminates (45, 48),welches ein über eine Haftkleberschicht (36) zum leichten Öffnen und Wiederverschliessen eines Verpackungsbehälters mit einer Heisssiegelschicht (38, 46) verbundenes folienförmiges Substrat (44) umfasst und über eine Siegelnaht mit sich selbst oder mit einer weiteren Folie zu einem Beutel formbar oder als Deckel mit dem Rand eines Behälters verbindbar ist,
**dadurch gekennzeichnet, dass**
(a) das folienförmige Substrat (44) über eine Flüssigfilm-Beschichtung mittels Vorhangguss oder Gleitbeschichtung mit einem mehrschichtigen, wenigstens eine Klebstoffschicht (34), die Haftkleberschicht (36) und eine kohäsiv brechende Heisssiegelschicht (38) umfassenden Flüssigfilm beschichtet wird, oder
(b) das folienförmige Substrat (44) oder eine kohäsiv brechende Heisssiegelschicht (46) über eine Flüssigfilm-Beschichtung mittels Vorhangguss oder Gleitbeschichtung mit einem mehrschichtigen, wenigstens zwei Klebstoffschichten (34, 35) und die Haftkleberschicht (36) umfassenden Flüssigfilm, wobei die Haftkleberschicht (36) zwischen den Klebstoffschichten (34, 35) angeordnet ist, beschichtet wird und das mit dem mehrschichtigen Flüssigfilm beschichtete Substrat (44) oder die beschichtete kohäsiv brechende Heisssiegelschicht (46) nachfolgend mit einem kohäsiv brechenden Heisssiegelfilm (46) bzw. mit dem Substrat (44) verbunden wird.

2. Verfahren nach Anspruch 1, **dadurch gekennzeichnet, dass** die Klebstoffschichten (34, 35) auf die Oberfläche des angrenzenden Substrats (44) und der Heisssiegelschicht (46) funktionell optimiert sind.

3. Verfahren nach Anspruch 1 oder 2, **dadurch gekennzeichnet, dass** die Dicke der Klebstoffschichten (34, 35) geringer ist als die Dicke der Haftkleberschicht (36).

4. Verfahren nach Anspruch 3, **dadurch gekennzeichnet, dass** die Dicke der Klebstoffschichten (34, 35) 1 bis 30 %; vorzugsweise 1 bis 10 %, der Dicke der Haftkleberschicht (36) beträgt.

5. Verfahren nach einem der Ansprüche 1 bis 4, **dadurch gekennzeichnet, dass** die Klebstoffschichten (34, 35) aus Klebstoffen auf der Basis von Urethan oder Acrylat zusammengesetzt sind.

6. Verfahren nach einem der Ansprüche 1 bis 5, **dadurch gekennzeichnet, dass** die Haftkleberschicht (36) einen Klebstoff auf Basis von Acrylat oder AB-A Block-Copolymeren von lsopren mit Styrol oder Butadien mit Styrol enthält auf Acrylatbasis enthält.

7. Verfahren nach einem der Ansprüche 1 bis 6, **dadurch gekennzeichnet, dass** die Schichten (34, 36, 38; 34, 36, 35) des Flüssigfilms lösemittelbasiert, lösemittelfrei oder wasserbasiert sind.

8. Verfahren nach einem der Ansprüche 1 bis 6, **dadurch gekennzeichnet, dass** das Substrat (44) ein Kunststofffilm, eine Metallfolie, Papier oder eine Kombination aus wenigstens zwei der vorstehend genannten Materialien ist.

9. Laminat, hergestellt mit dem Verfahren nach einem der Ansprüche 1 bis 8.

## Claims

1. Method for producing a laminate (45, 48) which comprises a film-shaped substrate (44) joined via a pressure sensitive adhesive layer for easy opening and resealing a packaging container to a heat sealing layer (38, 46) and is formable to form a bag via a sealing weld to itself or to another film or is connectable as a lid to the rim of a container,
**characterised in that**
(a) the film-shaped substrate (44) is coated via liquid film coating by means of curtain coating or slide coating with a multilayer liquid film comprising at least one adhesive layer (34), the pressure sensitive adhesive layer (36) and a cohesively breaking heat sealing layer (38), or
(b) the film-shaped substrate (44) or a cohesively breaking heat sealing layer (46) is coated via liquid film coating by means of curtain coating or slide coating with a multilayer liquid film comprising at least two adhesive layers (34, 35) and the pressure sensitive adhesive layer (36), wherein the pressure sensitive adhesive layer (36) is arranged between the adhesive layers (34, 35) and the substrate (44) coated with the multilayer liquid film or the coated cohesively breaking heat sealing layer (46) is subsequently joined to a cohesively breaking heat sealing film (46) or to the substrate (44) .

2. Method according to claim 1, **characterised in that** the adhesive layers (34, 35) are functionally optimised onto the surface of the adjoining substrate (44) and of the heat sealing layer (46).

3. Method according to claim 1 or 2, **characterised in that** the thickness of the adhesive layers (34, 35) is less than the thickness of the pressure sensitive adhesive layer (36).

4. Method according to claim 3, **characterised in that** the thickness of the adhesive layers (34, 35) amounts to 1 to 30 %, preferably 1 to 10 %, of the thickness of the pressure sensitive adhesive layer (36).

5. Method according to any of claims 1 to 4, **characterised in that** the adhesive layers (34, 35) are composed of adhesives based on urethane or acrylate.

6. Method according to any of claims 1 to 5, **characterised in that** the pressure sensitive adhesive layer (36) contains an adhesive based on acrylate or A-B-A block copolymers of isoprene with styrene or butadiene with styrene based on acrylate.

7. Method according to any of claims 1 to 6, **characterised in that** the layers (34, 36, 38; 34, 36, 35) of the liquid film are solvent-based, solvent-free or water-based.

8. Method according to any of claims 1 to 6, **characterised in that** the substrate (44) is a plastic film, a metal foil, paper or a combination of at least two of the materials identified above.

9. Laminate produced by the method according to any of claims 1 to 8.

## Revendications

1. Procédé pour la fabrication d'un élément stratifié (45, 48), qui comprend un substrat (44) en forme de feuille relié à une couche de scellement à chaud (38, 46) par l'intermédiaire d'une couche autoadhésive (36) (adhésif sensible à la pression), pour une ouverture facile et la refermeture d'un récipient d'emballage, et peut, par l'intermédiaire d'un joint de scellement, être relié à lui-même ou à une autre feuille pour former une poche, ou bien être relié, en tant que couvercle, au bord d'un récipient,
**caractérisé en ce que**
a) le substrat (44) en forme de feuille est revêtu par application de film liquide, au moyen d'un processus de coulée en rideau ou de revêtement par glissement, avec un film liquide à plusieurs couches, comprenant au moins une couche d'adhésif (34), la couche autoadhésive (36) et une couche de scellement à chaud (38) à rupture cohésive, ou
b) le substrat (44) en forme de feuille ou une couche de scellement à chaud (46) à rupture cohésive est revêtu par application de film liquide, au moyen d'un processus de coulée en rideau ou de revêtement par glissement, avec un film liquide à plusieurs couches, comprenant au moins deux couches d'adhésif (34, 35) et la couche autoadhésive (36), cette couche autoadhésive (36) étant agencée entre les couches d'adhésif (34, 35), et le substrat (44) revêtu par le film liquide à plusieurs couches ou bien la couche de scellement à chaud (46) à rupture cohésive revêtue est ensuite relié ou assemblé respectivement à un film de scellement à chaud (46) à rupture cohésive ou au substrat (44).

2. Procédé selon la revendication 1, **caractérisé en ce que** les couches d'adhésifs (34, 35) sont optimisées fonctionnellement par rapport à la surface du substrat adjacent (44) et de la couche de scellement à chaud (46).

3. Procédé selon la revendication 1 ou 2, **caractérisé en ce que** l'épaisseur des couches d'adhésif (34, 35) est inférieure à l'épaisseur de la couche autoadhésive (36).

4. Procédé selon la revendication 3, **caractérisé en ce que** l'épaisseur des couches d'adhésif (34, 35) vaut de 1 à 30%, de préférence de 1 à 10% de l'épaisseur de la couche autoadhésive (36).

5. Procédé selon l'une des revendications 1 à 4,
**caractérisé en ce que** les couches d'adhésif (34, 35) sont composées d'adhésifs à base d'uréthanne ou d'acrylate.

6. Procédé selon l'une des revendications 1 à 5, **caractérisé en ce que** la couche autoadhésive (36) contient un adhésif à base d'acrylate ou de copolymères en bloc A-B-A d'isoprène avec du styrène ou de butadiène avec du styrène sur base d'acrylate.

7. Procédé selon l'une des revendications 1 à 6,
**caractérisé en ce que** les couches (34, 36, 38 ; 34, 36, 35) du film liquide sont à base de solvant, exemptes de solvant ou à base d'eau.

8. Procédé selon l'une des revendications 1 à 6,
**caractérisé en ce que** le substrat (44) est un film de matière plastique, une feuille de métal, du papier ou une combinaison d'au moins deux des matériaux précédemment cités.

9. Elément stratifié, fabriqué à l'aide du procédé selon l'une des revendications 1 à 8.
